# FASCICULE DE BREVET EUROPEEN

(11) **EP 2 715 507 B1**
(45) Date de publication et mention de la délivrance du brevet: **04.07.2018**
(21) Numéro de dépôt: 12724625.4
(22) Date de dépôt: 30.05.2012
(51) Int. Cl.: G06F 3/048, G06F 3/033, F16M 11/00

(54) **SYSTEME DE MISSION ADAPTE A UNE UTILISATION EN ENVIRONNEMENT FORTEMENT PERTURBE PAR DES MOUVEMENTS DU PORTEUR**
EINSATZSYSTEM ZUR VERWENDUNG IN EINER STARK GESTÖRTEN UMGEBUNG DURCH BEWEGUNGEN DES TRÄGERS
MISSION SYSTEM ADAPTED FOR USE IN A STRONGLY DISTURBED ENVIRONMENT PERTURBED BY MOVEMENTS OF THE CARRIER

(30) Priorité: 01.06.2011 FR 1101683
(43) Date de publication de la demande: 09.04.2014
(73) Titulaire: THALES, 92400 Courbevoie (FR)
(72) Inventeur: GRISVARD, Olivier, F-29238 Brest Cedex 3 (FR); DAUPLAIT, Marc, F-29238 Brest Cedex 3 (FR); HUNTZINGER, Christophe, F-29238 Brest Cedex 3 (FR); KERMARREC, Michel, F-29238 Brest Cedex 3 (FR); LABORDE, Pierre, F-29238 Brest Cedex 3 (FR); LILETTE, Michel, F-29238 Brest Cedex 3 (FR)
(74) Mandataire: Priori, Enrico
(86) Numéro de dépôt international: PCT/EP2012/060163
(87) Numéro de publication internationale: WO 2012/163973

(56) Documents cités:
- WO-A2-2008/125847
- FR-A1- 2 897 172
- US-A1- 2006 133 016
- US-B1- 7 911 779

## Description

La présente invention concerne un système de mission. Elle s'applique plus particulièrement au domaine des interfaces Homme-Machine, communément désignées suivant le sigle IHM, de systèmes de mission en environnements contraints.

Des systèmes de mission permettent à un ou plusieurs opérateurs, via un ou une pluralité de dispositifs d'affichage, de visualiser des informations relatives à une mission, par exemple une carte de terrain, l'indication d'informations relatives à des véhicules, des dispositifs ou des personnes présents sur le terrain, ces informations pouvant être fournies par une variété de capteurs tels que des radars, des caméras, des détecteurs, etc. De tels systèmes permettent également à l'opérateur de saisir des commandes, lui permettant par exemple de configurer l'affichage qui lui est présenté, ou bien d'adresser des instructions à l'attention de dispositifs ou d'individus.

Par exemple, pour des missions dites tactiques, le système de mission fournit aux opérateurs une représentation synthétique de la situation tactique, c'est-à-dire des objets détectés par les capteurs, sur un fond cartographique par exemple. L'IHM d'un système de mission fournit aux opérateurs de ce système les moyens de contrôler les senseurs et les effecteurs au travers de la représentation synthétique fournie par le système. Une telle IHM consiste généralement en une application exécutée sur un dispositif physique, par exemple formé par une console disposant d'un ou plusieurs écrans dont certains peuvent être tactiles, et d'un ou plusieurs dispositifs de saisie d'instructions.

Les systèmes de mission peuvent être déployés au sol dans des bâtiments dédiés, pour du contrôle de drones par exemple, ou bien sur des plates-formes embarquées sur des porteurs, par exemple des aéronefs, des véhicules terrestres tels que des chars ou autres véhicules automobiles blindés, ou encore des navires. Les porteurs peuvent ainsi être animés de mouvements, ces derniers pouvant résulter en diverses contraintes au niveau du système et de son opérateur : notamment de mouvements brusques, de vibrations, de bruit élevé, de luminosité variable, etc, définissant un environnement désigné pour la suite "environnement contraint". L'utilisation du système de mission, via une interface homme-machine ou IHM en environnement contraint peut ainsi s'avérer délicate pour l'opérateur ; par exemple, le pointage d'objets sur un afficheur, ou bien la sélection de menus, peut être rendue difficile par les mouvements du porteur. Il est ainsi nécessaire que les systèmes soient conçus de manière à minimiser l'influence d'un environnement contraint sur leur utilisation.

Il est par exemple connu de recourir à un dispositif de saisie de type boule de commande, communément désignée suivant le terme anglais "Trackball", avec lequel l'opérateur fait rouler une partie émergée de la boule par exemple avec un doigt ou la paume de la main. Différents boutons peuvent être disposés à proximité de la boule, par exemple à des endroits accessibles par le bout des doigts, permettant d'activer diverses actions. La boule de commande est réputée pour être relativement peu sensible aux mouvements du porteur. Cependant, un inconvénient de la boule de commande est lié à sa forte inertie, demandant de la part de l'opérateur un effort non négligeable notamment pour faire parcourir un pointeur sur le dispositif d'affichage, par exemple dans le but de sélectionner des objets pour enclencher des actions.

Il est également par exemple connu de recourir à des systèmes de mission utilisant un ou une pluralité d'écrans tactiles. Les applications déployées sur ce type de dispositif doivent répondre à des exigences graphiques permettant leur utilisation dans des situations de mouvements et de vibrations importantes, et par exemple dans l'éventualité où l'opérateur revêt des gants. Ainsi, les objets d'interaction affichés doivent être définis avec des dimensions importantes, et leur mode de fonctionnement doit se limiter à un toucher unique ou "simple clic", et ne pas autoriser des fonctions telles que par exemple le "glisser-déplacer" consistant à déplacer l'objet à l'écran en maintenant le doigt appuyé sur l'écran, etc.

En outre, dans des environnements extrêmement contraints, par exemple lorsque le porteur est un aéronef évoluant à très basse altitude avec possibilité de météo défavorable, ou bien lorsque celui-ci est un véhicule terrestre évoluant sur un terrain accidenté, ou encore lorsque celui-ci est un navire évoluant sur une mer agitée, il est nécessaire à l'opérateur de se tenir à la structure du porteur afin d'éviter une chute ou des chocs, et celui-ci perd ainsi l'usage d'une de ses mains. Les actions ne peuvent alors se faire que par un unique moyen d'interaction, par exemple via la boule de commande, un clavier, un joystick ou un écran tactile, ce qui limite significativement le champ d'action de l'opérateur et nécessite une IHM spécifiquement conçue dans ce sens.

La demande de brevet français publié sous la référence FR 2897172 décrit un appareil portable d'affichage de données comprenant un écran définissant une zone d'affichage de données en marge de laquelle l'écran comprend une zone de commande tactile qui jouxte un bord latéral de l'appareil et dans laquelle est prévue une touche tactile de commande multidirectionnelle de défilement des données affichées dans !a zone d'affichage. Le dispositif décrit comporte des zones latérales de préhension permettant à l'utilisateur d'utiliser la touche tactile à l'aide de son pouce et de faire défiler de façon précise les données affichées dans la zone même lorsqu'il se déplace en tenant l'appareil fermement en main.

Cependant le dispositif décrit ne comporte aucun moyen permettant à l'opérateur lorsqu'il est amené à mettre en oeuvre le dispositif, alors qu'il se trouve lui-même placé dans un environnement chahuté, de conserver une attitude stable et de se prémunir de mouvements pouvant compromettre son propre équilibre.

Un but de la présente invention est de remédier au moins aux inconvénients précités, en proposant un système de mission permettant à un opérateur de travailler plus aisément dans les conditions difficiles imposées par un environnement contraint.

La solution proposée par l'invention repose sur un système de mission comprenant au moins un dispositif d'affichage, ainsi que des moyens de préhension judicieusement intégrés au système permettant à l'opérateur de s'y maintenir fermement. Une telle configuration permet à l'opérateur de résister aux mouvements du porteur, d'éviter les chutes et les chocs, tout en continuant à pouvoir enclencher avec précision des actions via l'IHM, par exemple avec les pouces via des objets d'interaction tels que des boutons affichés ou avec d'autres doigts de la main via des dispositifs physiques d'interaction situés par exemple en arrière de l'écran. La fatigue de l'opérateur lors d'un usage prolongé est de la sorte minimisée. L'interface logicielle peut être avantageusement conçue de façon à être adaptée de manière optimale au système de mission,

A cet effet, l'invention a pour objet un système de mission apte à être fixé dans un porteur, comprenant au moins un dispositif selon la revendication 1. Dans un mode de réalisation de l'invention, le dispositif d'affichage peut comprendre au moins un écran tactile, lesdits moyens de saisie comprenant au moins des objets d'interaction affichés sur l'écran tactile, les objets d'interaction étant disposés sur la zone d'affichage offerte par le dispositif d'affichage de manière à pouvoir être actionnés par les pouces de l'opérateur lorsque celui-ci saisit lesdits moyens de préhension.

Dans un mode de réalisation de l'invention, lesdits objets d'interaction peuvent être des boutons virtuels.

Dans un mode de réalisation de l'invention, lesdits moyens de saisie peuvent comprendre au moins des dispositifs physiques d'interaction disposés sensiblement en arrière du dispositif d'affichage, les dispositifs physiques d'interaction étant disposés de manière à pouvoir être actionnés par tout ou partie des doigts de l'opérateur autres que le pouce, d'une ou deux de ses mains.

Dans un mode de réalisation de l'invention, lesdits dispositifs physiques d'interaction peuvent être des boutons.

Dans un mode de réalisation de l'invention, lesdits objets d'interaction peuvent être disposés sensiblement le long d'arcs de cercles centrés sur les bases des pouces de l'opérateur lorsque celui-ci saisit lesdits moyens de préhension.

Dans un mode de réalisation de l'invention, lesdits moyens de préhension étant formés au niveau d'au moins un bord latéral du dispositif d'affichage, celui-ci étant conçu de manière à ce qu'au moins une partie de ses bords latéraux dépasse de la console.

Dans un mode de réalisation de l'invention, lesdits moyens de préhension étant formés par des évidements réalisés dans les flans latéraux de la console.

Dans un mode de réalisation de l'invention, le système de mission peut comprendre des moyens de positionnement configurés pour orienter l'inclinaison dudit au moins un écran formant le dispositif d'affichage.

Dans un mode de réalisation de l'invention, le bâti de support peut être formé par une tablette sensiblement horizontale, le dispositif d'affichage étant formé par un premier écran en contact avec la tablette en son bord inférieur et incliné d'un premier angle par rapport à un plan horizontal, et un second écran dont le bord inférieur est en contact avec le bord supérieur dudit premier écran, et incliné d'un second angle par rapport au plan horizontal.

D'autres caractéristiques et avantages de l'invention apparaîtront à la lecture de la description, donnée à titre d'exemple, faite en regard des dessins annexés qui représentent :
- la figure 1, une vue en perspective illustrant un exemple de réalisation d'un système de mission selon un mode de réalisation de l'invention ;
- la figure 2, une vue en perspective illustrant un exemple d'utilisation d'un système de mission tel qu'illustré par la figure 1 ;
- la figure 3, une vue de profil illustrant un exemple de système de mission selon un mode de réalisation avantageux de l'invention.

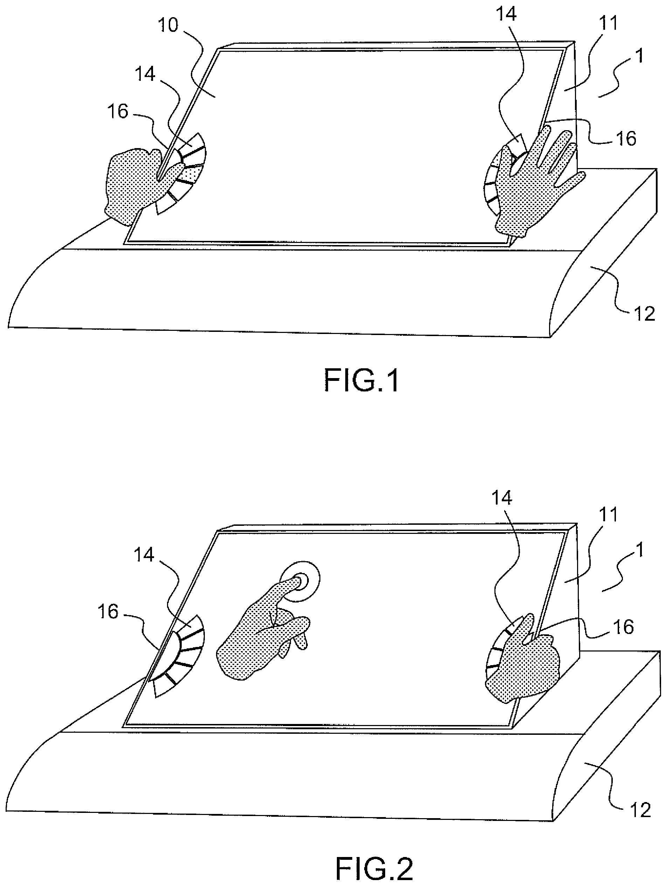

La figure 1 présente une vue en perspective illustrant un exemple de réalisation d'un système de mission selon un mode de réalisation de l'invention. L'exemple illustré par la figure 1 n'est pas limitatif de la présente invention. Un système de mission 1 peut comprendre au moins un dispositif d'affichage 10. Le dispositif d'affichage peut par exemple être supporté par une console 11, la console pouvant par exemple être supportée par un bâti de support 12. Le dispositif d'affichage 10 peut être formé par au moins un écran tactile, par exemple multipoints, c'est-à-dire permettant une saisie simultanée d'une pluralité d'actions par des pressions ou appositions de doigts en différents points de l'écran. La console 11 et le bâti de support 12 peuvent être deux éléments distincts, ou bien peuvent ne former qu'un seul élément. Le bâti de support 12 peut permettre la fixation de l'ensemble du système de mission 1 à la structure du porteur, par exemple une paroi, non représentée sur la figure. De la sorte, grâce à des moyens de fixation, le système de mission peut être rendu solidaire de la structure du porteur, notamment du sol de celui-ci. Le système de mission 1 comprend également des moyens de traitement s'interfaçant notamment avec le dispositif d'affichage 10 et des moyens de saisie permettant à l'opérateur de saisir des instructions, et permettant l'exécution d'applications. Les moyens de traitement peuvent par exemple être mis en oeuvre dans un dispositif physique tel qu'un micro-ordinateur, par exemple compris dans la console 11. Les moyens de saisie peuvent être formés par exemple par la surface tactile de l'écran du dispositif d'affichage, ou possiblement par des dispositifs de commande physiques, tels que des boutons, des joysticks, des surfaces tactiles, etc.

Selon une spécificité de la présente invention, des moyens de préhension 16 peuvent permettre à un opérateur de se maintenir fermement agrippé au système de mission 1. Dans l'exemple illustré par la figure, les moyens de préhension 16 peuvent être simplement formés par la structure-même du dispositif d'affichage 10 : par exemple sensiblement sur les parties latérales gauche et droite de l'écran du dispositif d'affichage 10, faisant face à la zone d'affichage. La structure du dispositif d'affichage 10 peut par exemple dépasser de la partie de la console 11 à laquelle celui-ci est rattaché, c'est-à-dire des flans latéraux gauche et droite de la console 11. Il est également possible qu'un unique bord du dispositif d'affichage comprenne les moyens de préhension 16.

L'écran du dispositif d'affichage 10 peut être réalisé de manière à présenter une épaisseur permettant à l'opérateur de placer ses doigts de part et d'autre de celui-ci ; plus précisément, le pouce de l'opérateur peut être disposé sensiblement en face avant du dispositif d'affichage 10, c'est-à-dire au-dessus de la zone d'affichage, les autres doigts pouvant en tant que de besoin être simultanément disposés sensiblement en arrière de la face arrière du dispositif d'affichage 10. Les moyens de préhension peuvent par exemple être disposés des deux côtés de l'écran, c'est-à-dire à la droite et à la gauche de celui-ci, lorsqu'il est fait face à la zone d'affichage. De la sorte, il peut être permis à l'opérateur d'utiliser un ou ses deux pouces dans toute leur extension tout en se tenant agrippé via les moyens de préhension 16 aux bords de l'écran. Ainsi, des objets d'interaction tels que des boutons virtuels peuvent par exemple être sélectionnés ou actionnés par l'opérateur via les pouces, l'opérateur ayant la possibilité de se maintenir agrippé grâce aux autres doigts de la main disposés en face arrière du dispositif d'affichage 10.

Les objets d'interaction ou boutons virtuels peuvent par exemple être disposés le long d'un arc de cercle centré sensiblement en un point coïncidant avec les emplacements prévus pour les bases des pouces de l'opérateur. Seule une partie de la hauteur d'un écran du dispositif d'affichage 10 peut être conçue de manière à former les moyens de préhension 16, ou bien l'intégralité de la hauteur de l'écran du dispositif d'affichage 10 peut être exploitée. Dans le second cas précité, différents objets d'interaction ou boutons virtuels peuvent être disposés sur toute la hauteur d'affichage, la position de ceux-ci pouvant être éventuellement redéfinie en temps réel par les moyens de traitement, en fonction du contexte.

Avantageusement, des dispositifs physiques d'interaction tels que des boutons physiques peuvent être disposés dans la partie arrière du dispositif d'affichage 10, les dispositifs physiques d'interaction étant aptes à recevoir les doigts de l'opérateur autres que le pouce, c'est-à-dire les index, majeurs, annulaires ou auriculaires d'une ou des deux mains, lorsque l'opérateur saisit les moyens de préhension 16. Ces dispositifs physiques d'interaction peuvent par exemple être des boutons tels que des boutons poussoirs, pressés pour enclencher des actions particulières, ou des actions sélectionnées via le dispositif d'affichage 10. Ainsi, un ou plusieurs boutons poussoirs peuvent être disposés au dos du dispositif d'affichage 10, à la périphérie de la zone où l'opérateur glisse ses doigts pour agripper le dispositif d'affichage 10, pour lui permettre de déclencher des actions à l'IHM avec ses doigts tout en maintenant sa prise sur le dispositif d'affichage 10. Des dispositifs physiques plus complexes peuvent également être envisagés, tels que des joysticks ou bien des surfaces tactiles par exemple.

L'écran du dispositif d'affichage 10 peut offrir une inclinaison appropriée par rapport à un plan horizontal, de manière à faciliter la lecture des données y affichées pour un opérateur, selon la posture prévue de ce dernier par rapport à l'écran, par exemple une position debout ou une position assise. La position et l'inclinaison de l'écran du dispositif d'affichage 10 ainsi que les objets d'interaction ou boutons virtuels et les dispositifs physiques d'interaction précités permettant une manipulation de l'IHM sont choisis afin de minimiser la fatigue musculaire des épaules, bras, coudes, avant-bras, poignets et mains de l'opérateur lorsque celui-ci agrippe le dispositif d'affichage. La zone d'action des pouces de l'opérateur à l'écran peut être notamment conçue de manière à permettre à celui-ci :
- un maximum d'actions dans la limite de la zone couverte par les pouces ;
- un accès aux actions le plus aisé possible.

Avantageusement, des moyens de positionnement, formés par exemple par une liaison pivot disposée en la base de l'écran du dispositif d'affichage 10, peuvent permettre de varier l'inclinaison de celui-ci. Divers moyens de positionnement peuvent être envisagés dans les modes de réalisation où le dispositif d'affichage 10 comprend une pluralité d'écrans.

Dans l'exemple d'utilisation du système de mission 1 illustré par la figure 1, l'opérateur utilise simultanément les deux pouces de ses mains gauche et droite respectivement, pour actionner des boutons virtuels situés à gauche et à droite de la zone d'affichage offerte par l'écran du dispositif d'affichage 10. L'opérateur se tient agrippé par sa main gauche, et utilise potentiellement les autres doigts de sa main gauche pour enclencher des actions via des dispositifs physiques d'interaction situés en arrière de l'écran.

La figure 2 présente une vue en perspective illustrant un exemple d'utilisation d'un système de mission 1 tel qu'illustré par la figure 1. Dans l'exemple d'utilisation illustré par la figure 2, l'opérateur se tient agrippé par sa main droite dont le pouce agit possiblement sur un objet d'interaction virtuel présenté sur la zone d'affichage de l'écran du dispositif d'affichage 10, et dont un ou plusieurs des autres doigts agissent possiblement sur un ou plusieurs dispositifs physiques d'interaction tels que des boutons poussoirs situés au dos de la zone d'affichage. Simultanément, l'opérateur peut pointer par exemple avec l'index de sa main gauche, un point particulier sur la zone d'affichage de l'écran du dispositif d'affichage 10.

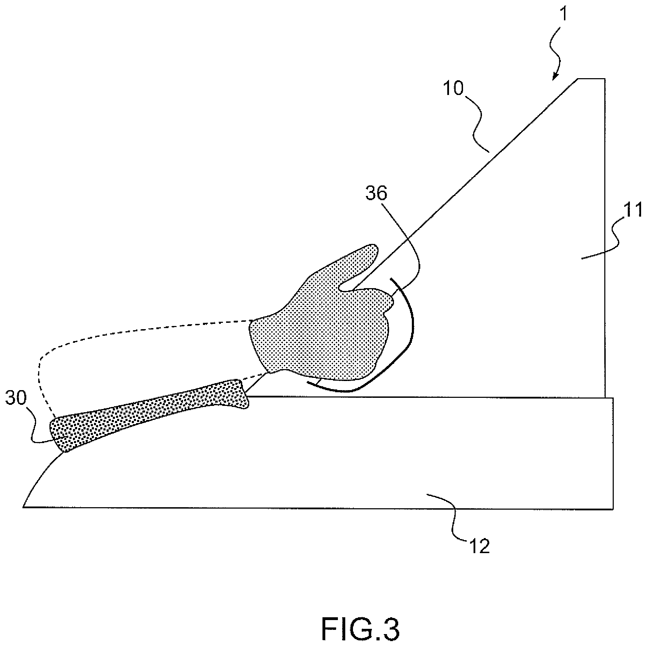

La figure 3 présente une vue de profil illustrant un exemple de système de mission selon un mode de réalisation avantageux de l'invention.

D'une manière similaire aux exemples de réalisation décrits précédemment en référence aux figures 1 et 2, un système de mission 1 peut comprendre au moins une console 11 disposée sur un bâti de support 12, la console 11 comprenant un dispositif d'affichage 10. Dans l'exemple de réalisation illustré par la figure 3, les moyens de préhension peuvent être formés sur les côtés gauche et droit du dispositif d'affichage 10, par des évidements 36 accueillant les doigts de l'opérateur, les évidements 36 étant formés dans les flans latéraux de la console 11. De la sorte, il est par exemple permis que les bords de l'écran du dispositif d'affichage 10 ne dépassent pas de la structure de la console 11, l'ensemble formant alors une structure particulièrement ergonomique. Les dispositifs physiques d'interaction peuvent être disposés sensiblement au fond des évidements 36, au niveau des dernières phalanges des doigts de l'opérateur, lorsque ses mains sont disposées de manière à agripper le système de mission 1 via les moyens de préhension.

Avantageusement, dans un souci d'améliorer le confort et l'ergonomie du système de mission 1, des repose-bras 30 peuvent être disposés, par exemple sur le bâti de support 12, sensiblement à la base du dispositif d'affichage 10 et dans l'alignement des moyens de préhension, de manière à accueillir les avant-bras de l'opérateur.

Il est à observer que les exemples de réalisation décrits précédemment en référence aux figures 1 à 3 illustrent un dispositif d'affichage 10 comprenant un unique écran. Il est cependant possible que le système de mission 1 comporte une pluralité d'écrans. Un exemple de mode de réalisation particulièrement avantageux d'un système de mission est décrit en détails ci-après.
- Le bâti de support 12 peut être fixé à la structure du porteur et formé par une tablette sensiblement horizontale, disposée à une hauteur permettant à l'opérateur de reposer ses avant-bras à l'horizontal ;
- le dispositif d'affichage 10 peut comprendre un premier écran tactile disposé au-dessus de la tablette, par exemple directement en contact avec la tablette en son bord inférieur et incliné d'un premier angle, par exemple d'environ 33 degrés par rapport à un plan horizontal ;
- le dispositif d'affichage 10 peut comprendre un second écran tactile pouvant être disposé au-dessus du premier dispositif d'affichage, le bord inférieur du second écran étant en contact direct avec le bord supérieur du premier écran, le second écran étant par exemple de dimensions identiques à celles du premier écran, et incliné d'un second angle, par exemple d'environ 77 degrés par rapport à un plan horizontal ;
- l'épaisseur des écrans peut être choisie sensiblement entre 1 cm et 3cm;
- les écrans peuvent être choisis de sorte que la largeur des bordures sur leurs bords latéraux droite et gauche, entre le bord extérieur de l'écran et la surface d'affichage tactile, ne soit pas supérieure à 2 cm ;
- les moyens de préhension peuvent être disposés à droite et à gauche d'un écran, ou des deux écrans ;
- un bouton poussoir ou une pluralité de boutons poussoirs peuvent par exemple être disposés de chaque côté de chaque écran, au dos de l'écran, juste au-dessus de la zone de placement de la main de façon à permettre une pression sur ces boutons en déplaçant légèrement l'index de chaque main vers le haut ;
- un menu circulaire tel que précédemment décrit peut être disposé sur l'IHM affichée sur chaque écran, de chaque côté de l'écran, le rayon du menu circulaire correspondant à l'extension du pouce et étant situé :
   ∘ pour le premier écran, à une hauteur permettant la manipulation du menu avec le pouce tout en agrippant l'écran avec la main dans l'axe de l'avant-bras, ce dernier reposant à l'horizontal sur la tablette ;
   ∘ pour le second écran, dans le coin inférieur de l'écran.

Il est bien entendu que d'autres modes de réalisation sont envisageables, dans lesquels par exemple un châssis unique peut contenir un système de mission tel que précédemment décrit, associé par exemple à un siège ou un dossier permettant d'accueillir l'opérateur respectivement en position assise ou debout, etc.

Un avantage des modes de réalisation de l'invention décrits précédemment pour l'opérateur est la capacité qui lui est offerte de se tenir au dispositif d'affichage avec l'une ou l'autre de ses deux mains, voire les deux si nécessaire, tout en continuant à manipuler l'IHM. Dans ce cadre, l'utilisation d'un écran tactile avec une conception spécifique de l'IHM offre à l'opérateur un champ d'action plus important et une précision plus élevée tout en minimisant les efforts de manipulation par rapport aux solutions connues. De la sorte, l'opérateur peut continuer à manipuler l'IHM sans efforts et avec précision dans des situations difficiles voire extrêmes de mouvements brutaux ou de vibrations importantes du porteur sans risquer de choc ou de chute.

## Revendications

1. Système de mission (1) apte à être fixé dans un porteur, comprenant au moins :
- un dispositif d'affichage (10) affichant au moins des données de mission,
- des moyens de saisie d'instructions par un opérateur,
- des moyens de traitement permettant l'exécution d'applications et un interfaçage avec ledit dispositif d'affichage (10) et avec les moyens de saisie;
le système de mission (1) étant **caractérisé en ce qu'**il comporte en outre une console (11) à l'intérieur de laquelle les moyens de traitement sont logés et sur laquelle le dispositif d'affichage (10) est fixé,
des moyens de préhension disposés à proximité du dispositif d'affichage de sorte que l'opérateur puisse par au moins une de ses mains disposer des moyens de saisie tout en se tenant agrippé au système de mission via lesdits moyens de préhension,
ainsi qu'un bâti support (12) sur lequel est placée la console (11), le bâti support (12) et la console (11) étant solidaires l'un de l'autre, le système de mission étant fixé à la structure du porteur par ledit bâti support (12); le bâti de support (12) comprenant en outre des repose-bras disposés sur le bâti de support, sensiblement à la base du dispositif d'affichage et dans l'alignement des moyens de préhension.

2. Système de mission (1) selon la revendication 1, **caractérisé en ce que** le dispositif d'affichage (10) comprend au moins un écran tactile, lesdits moyens de saisie comprenant au moins des objets d'interaction affichés sur l'écran tactile, les objets d'interaction étant disposés sur la zone d'affichage offerte par le dispositif d'affichage (10) de manière à pouvoir être actionnés par les pouces de l'opérateur lorsque celui-ci saisit lesdits moyens de préhension (16).

3. Système de mission (1) selon la revendication 2, **caractérisé en ce que** lesdits objets d'interaction sont des boutons virtuels.

4. Système de mission (1) selon l'une quelconque des revendications précédentes, **caractérisé en ce que** lesdits moyens de saisie comprennent au moins des dispositifs physiques d'interaction disposés sensiblement en arrière du dispositif d'affichage (10), les dispositifs physiques d'interaction étant disposés de manière à pouvoir être actionnés par tout ou partie des doigts de l'opérateur autres que le pouce, d'une ou deux de ses mains.

5. Système de mission (1) selon la revendication 4, **caractérisé en ce que** les dispositifs physiques d'interaction sont des boutons.

6. Système de mission (1) selon l'une quelconque des revendications 2 à 5, **caractérisé en ce que** lesdits objets d'interaction sont disposés sensiblement le long d'arcs de cercles centrés sur les bases des pouces de l'opérateur lorsque celui-ci saisit lesdits moyens de préhension (16).

7. Système de mission (1) selon l'une quelconque des revendications précédentes, **caractérisé en ce que**, le dispositif d'affichage (10) étant conçu de manière à ce qu'au moins une partie de ses bords latéraux dépasse de la console (11), lesdits moyens de préhension (16) sont formés par au moins un bord latéral du dispositif d'affichage (10).

8. Système de mission (1) selon l'une quelconque des revendications 1 à 6, **caractérisé en ce que** lesdits moyens de préhension (16) sont formés par des évidements (36) réalisés dans les flans latéraux de la console (11).

9. Système de mission (1) selon l'une quelconque des revendications précédentes, **caractérisé en ce que** le dispositif d'affichage (10) est monté sur la console (11) par l'intermédiaire de moyens de positionnement configurés pour orienter l'inclinaison dudit au moins un écran formant le dispositif d'affichage (10).

10. Système de mission (1) selon l'une quelconque des revendications précédentes, **caractérisé en ce que** le bâti de support (12) est formé par une tablette sensiblement horizontale, le dispositif d'affichage (10) étant formé par un premier écran en contact avec la tablette en son bord inférieur et incliné d'un premier angle par rapport à un plan horizontal, et un second écran dont le bord inférieur est en contact avec le bord supérieur dudit premier écran, et incliné d'un second angle par rapport au plan horizontal.

## Patentansprüche

1. Missionssystem (1) zum Behoben in einem Träger, das wenigstens Folgendes umfasst:
- eine Anzeigevorrichtung (10), die wenigstens Missionsdaten anzeigt,
- Mittel zum Eingaben von Befehlen durch einen Bediener,
- Verarbeitungsmittel, die das Ausführen von Anwendungen und eine Schnittstelle mit der Anzeigevorrichtung (10) und mit den Erfassungsmitteln ermöglichen;
wobei das Missionssystem (1) **dadurch gekennzeichnet ist, dass** es ferner eine Konsole (11) umfasst, in deren Innerem die Verarbeitungsmittel untergebracht sind und an der die Anzeigevorrichtung (10) befestigt ist,
Greifmittel, die in der Nähe der Anzeigevorrichtung angeordnet sind, so dass der Bediener mit wenigstens einer Hand die Mittel zum Eingaben bedienen kann, indem er das Missionssystem über die Greifmittel festhält,
sowie ein Stützrahmen (12), auf dem die Konsole (11) platziert ist, wobei das Stützrahmen (12) und die Konsole (11) fest miteinander verbunden sind, wobei das Missionssystem durch das Stützrahmen (12) an der Struktur des Trägers befestigt ist;
wobei das Stützrahmen (12) ferner Armstützen umfasst, die auf dem Stützrahmen im Wesentlichen an der Basis der Anzeigevorrichtung und mit den Greifmitteln fluchtend angeordnet sind.

2. Missionssystem (1) nach Anspruch 1, **dadurch gekennzeichnet, dass** die Anzeigevorrichtung (10) wenigstens einen Touchscreen umfasst, wobei die Eingabensmittel wenigstens auf dem Touchscreen angezeigte Interaktionsobjekte umfassen, wobei die Interaktionsobjekte auf der durch die Anzeigevorrichtung (10) bereitgestellten Anzeigezone angeordnet werden, so dass sie mit den Daumen des Bedieners betätigt werden können, wenn dieser die Greifmittel (16) ergreift.

3. Missionssystem (1) nach Anspruch 2, **dadurch gekennzeichnet, dass** die Interaktionsobjekte virtuelle Tasten sind.

4. Missionssystem (1) nach einem der vorherigen Ansprüche, **dadurch gekennzeichnet, dass** die Mittel zum Eingaben wenigstens physische Interaktionsvorrichtungen umfassen, die im Wesentlichen im hinteren Teil der Anzeigevorrichtung (10) angeordnet sind, wobei die physischen Interaktionsvorrichtungen so angeordnet sind, dass sie von allen oder einigen der Finger des Bedieners, außer dem Daumen, von einer oder von beiden Händen betätigt werden können.

5. Missionssystem (1) nach Anspruch 4, **dadurch gekennzeichnet, dass** die physischen Interaktionsvorrichtungen Tasten sind.

6. Missionssystem (1) nach einem der Ansprüche 2 bis 5, **dadurch gekennzeichnet, dass** die Interaktionsobjekte im Wesentlichen entlang Kreisbögen angeordnet sind, zentriert an der Basis der Daumen des Bedieners, wenn dieser die Greifmittel (16) ergreift.

7. Missionssystem (1) nach einem der vorherigen Ansprüche, **dadurch gekennzeichnet, dass** die Anzeigevorrichtung (10) auf eine solche Weise ausgelegt ist, dass wenigstens ein Teil ihrer Seitenränder über die Konsole (11) hinaus verläuft, wobei die Greifmittel (16) durch wenigstens einen Seitenrand der Anzeigevorrichtung (10) gebildet werden.

8. Missionssystem (1) nach einem der Ansprüche 1 bis 6, **dadurch gekennzeichnet, dass** die Greifmittel (16) durch Aussparungen (36) gebildet werden, die in den seitlichen Flanschen der Konsole (11) realisiert sind.

9. Missionssystem (1) nach einem der vorherigen Ansprüche, **dadurch gekennzeichnet, dass** die Anzeigevorrichtung (10) an der Konsole (11) mittels Positionierungsmitteln montiert ist, die zum Orientieren der Neigung des wenigstens einen Bildschirms konfiguriert sind, der die Anzeigevorrichtung (10) bildet.

10. Missionssystem (1) nach einem der vorherigen Ansprüche, **dadurch gekennzeichnet, dass** das Stützrahmen (12) durch ein im Wesentlichen horizontales Tablett gebildet wird, wobei die Anzeigevorrichtung (10) durch einen ersten Bildschirm in Kontakt mit dem Tablett an seinem unteren Rand und in einem ersten Winkel mit Bezug auf eine horizontale Ebene geneigt gebildet ist, und von einem zweiten Bildschirm, dessen unterer Rand mit dem oberen Rand des ersten Bildschirms in Kontakt und in einem zweiten Winkel mit Bezug auf die horizontale Ebene geneigt ist.

## Claims

1. A mission system (1) able to be fixed in a carrier, comprising at least:
- a display device (10) displaying at least mission data,
- means for inputting instructions by an operator,
- processing means allowing the execution of applications and interfacing with said display device (10) and with the inputting means;
the mission system (1) being **characterized in that** it further comprises a console (11) within which the processing means are accommodated and to which the display device (10) is fixed,
a handle disposed in the vicinity of the display device so that the operator can employ the inputting means with at least one of his hands while clasping the mission system via said handle,
as well as a support frame (12) on which the console (11) is placed, the support frame (12) and the console (11) being joined to one another, the mission system being fixed to the carrier structure by said support frame (12);
the support frame (12) further comprising arm rests disposed on the support frame, substantially at the base of the display device and in alignment with the handle.

2. The mission system (1) according to Claim 1, **characterized in that** the display device (10) comprises at least one touchscreen, said inputting device comprising at least interaction objects displayed on the touchscreen, the interaction objects being disposed on the display area offered by the display device (10) so as to be able to be actuated by the thumbs of the operator when the latter is grasping said handle (16).

3. The mission system (1) according to Claim 2, **characterized in that** said interaction objects are virtual buttons.

4. The mission system (1) according to any of the preceding claims, **characterized in that** the said inputting means comprise at least physical interaction devices disposed substantially at the rear of the display device (10), the physical interaction devices being disposed so as to be able to be actuated by all or some of the operator's fingers other than the thumb of one or both of his hands.

5. The mission system (1) according to Claim 4, **characterized in that** the physical interaction devices are buttons.

6. The mission system (1) according to any of Claims 2 to 5, **characterized in that** said interaction objects are disposed substantially along circular arcs centered on the bases of the thumbs of the operator when the latter is grasping said handle (16).

7. The mission system (1) according to any of the preceding claims, **characterized in that** since the display device (10) is designed such that at least part of its lateral edges overhangs the console (11), said handle (16) is formed by at least one lateral edge of the display device (10).

8. The mission system (1) according to any of Claims 1 to 6, **characterized in that** said handle (16) is formed by recesses (36) made in the lateral sides of the console (11).

9. The mission system (1) according to any of the preceding Claims, **characterized in that** the display device (10) is mounted on the console (11) via positioning means configured to orientate the inclination of said at least one screen forming the display device (10).

10. The mission system (1) according to any of the preceding Claims, **characterized in that** the support frame (12) is formed by a substantially horizontal tablet, the display device (10) being formed by a first screen in contact with the tablet in its lower edge and inclined by a first angle in relation to a horizontal plane, and a second screen, the lower edge of which is in contact with the upper edge of said first screen and which is inclined by a second angle in relation to the horizontal plane.
